# EUROPÄISCHE PATENTANMELDUNG

(11) **EP 4 124 920 A1**
(43) Veröffentlichungstag der Anmeldung: **01.02.2023**
(21) Anmeldenummer: 21188841.7
(22) Anmeldetag: 30.07.2021
(51) Int. Cl.: G05B 23/02

(54) **WARNVERFAHREN FÜR EINEN MITBENUTZER EINER AUTOMATISIERUNGSANLAGE, COMPUTERPROGRAMMPRODUKT UND AUTOMATISIERUNGSANLGE**

(71) Anmelder: Siemens Aktiengesellschaft, 80333 München (DE)
(72) Erfinder: Lutz, Benjamin, 76327 Pfinztal (DE)

(57) **Zusammenfassung**

Die Erfindung betrifft ein Warnverfahren (100) für einen Mitbenutzer (14) einer Steuereinheit (30) einer Automatisierungsanlage (10). Die Automatisierungsanlage (10) umfasst eine Mehrzahl an Geräten (20), die in einer Funktionsgruppe (25) koordiniert zusammen ansteuerbar sind. Das Warnverfahren (100) umfasst einen ersten Schritt (110), in dem die Geräte (20) in einem aktiven Betriebszustand bereitgestellt werden. Es folgt ein zweiter Schritt (120), in dem ein Auswählen zumindest eines Geräts (20) der Funktionsgruppe (25) oder der Funktionsgruppe (25) durch einen Hauptbenutzer (12) erfolgt. In einem dritten Schritt (130) wird eine Warnmeldung (40) für das zumindest eine im Schritt b) ausgewählte Gerät (20) bzw. die Funktionsgruppe (25) erzeugt. Darauf folgt ein vierter Schritt (140), in dem ein Einfügen der Warnmeldung (40) in eine aktive Alarmliste (52) und Ausgeben der Warnmeldung (40) an den Mitbenutzer (14) durchgeführt wird. Dabei weist die Warnmeldung (40) ein durch den Hauptbenutzer (12) editierbares Kommentarfeld (42) auf. Die Erfindung betrifft auch ein Computerprogrammprodukt (60) zum Durchführen des Warnverfahrens (100), eine entsprechend ausgestattete Steuereinheit (30) und eine Automatisierungsanlage (10) mit einer derartigen Steuereinheit (30).

## Beschreibung

Die Erfindung betrifft ein Warnverfahren für einen Mitbenutzer einer Automatisierungsanlage und ein Computerprogrammprodukt und dieses durchzuführen. Gleichermaßen betrifft die Erfindung eine Steuereinheit für eine Automatisierungsanlage, die über ein entsprechendes Computerprogrammprodukt verfügt und eine korrespondierend ausgestattete Automatisierungsanlage.

Aus der bisher unveröffentlichten Europäischen Patentanmeldung 21176892.4 ist ein graphisch unterstütztes Warnverfahren für eine automatisierte Anlage bekannt, bei dem einem Benutzer Zustandsvariablen und/oder Steuerungsvariablen der automatisierten Anlage graphisch aufbereitet angezeigt werden. Auf einer ersten graphischen Benutzeroberfläche wird ein Alarm in Form einer Alarmbenachrichtigung ausgegeben, die eine vom Benutzer aufrufbare unmittelbare Verknüpfung aufweist, durch die eine zweite graphische Benutzeroberfläche erreichbar ist.

Automatisierungsanlagen werden häufig durch eine Mehrzahl an Benutzern gemeinsam gesteuert. Bei einer Übergabe von einem Benutzer an einen anderen Benutzer oder bei gleichzeitiger Tätigkeit mehrerer Benutzer werden zwischen diesen Angaben ausgetauscht, welche Besonderheiten im weiteren bevorstehenden Betrieb der Automatisierungsanlage zu beachten sind. Diese Praxis ist fehleranfällig und kann zu Sicherheitsbeeinträchtigungen und Effizienzverlusten im Betrieb führen. Der Erfindung liegt die Aufgabe zugrunde, einen Mehrbenutzerbetrieb einer Automatisierungsanlage in puncto Sicherheit und Wirtschaftlichkeit zu verbessern.

Die Aufgabenstellung wird durch ein erfindungsgemäßes Warnverfahren gelöst, das auf einer Automatisierungsanlage ausführbar ist. Die Automatisierungsanlage ist durch einen Hauptbenutzer und zumindest einen Mitbenutzer mit separat vorgebbaren Steuerungsberechtigungen steuerbar. Ferner verfügt die Automatisierungsanlage über eine Mehrzahl an Geräten, durch die in der Automatisierungsanlage ein Anlagenprozess durchführbar ist. Unter den Geräten sind hierbei Sensoren, Aktoren oder Anlagenkomponenten zu verstehen, durch die auf ein Prozessmedium im Zuge des Anlagenprozesses eingewirkt wird. Die Geräte sind in der Automatisierungsanlagen zu mindestens einer Funktionsgruppe zusammengefasst und als solche koordiniert zusammen ansteuerbar. Eine derartige Funktionsgruppe kann bei einer Produktionsanlage beispielsweise der Verpackungsabschnitt sein, in dem Faltmaschinen für Kartons und Förderbänder koordiniert zusammenwirken, um eine produzierte Ware selbsttätig zu verpacken. Das Verfahren umfasst einen ersten Schritt, in dem ein Bereitstellen der Geräte in einem aktiven Zustand erfolgt. Demzufolge werden die Geräte, die zusammen die zumindest eine Funktionsgruppe bilden, funktionstüchtig und in einem bestimmungsgemäßen Betrieb der Automatisierungsanlage bereitgestellt, von dem das weitere Verfahren ausgeht.

In einem zweiten Schritt des Verfahrens erfolgt ein Auswählen zumindest eines Geräts der Funktionsgruppe oder der Funktionsgruppe durch den Hauptbenutzer. Das Auswählen kann hierbei beispielsweise über eine graphische Benutzeroberfläche einer Steuereinheit erfolgen, über die die Automatisierungsanlage steuerbar ist. Ferner umfasst das Verfahren einen dritten Schritt, in dem für eine Warnmeldung für das Gerät oder die Funktionsgruppe, die im zweiten Schritt ausgewählt werden, erzeugt. Die Warnmeldung ist hierbei eine Repräsentation einer Benachrichtigung, die beispielsweise durch die graphische Benutzeroberfläche anzeigbar ist. Die Warnmeldung ist dem Gerät bzw. der Funktionsgruppe fest zugeordnet und wird im Rahmen der Funktionalität der graphischen Benutzeroberfläche wie eine Objekteigenschaft mit dem Gerät bzw. der Funktionsgruppe verbunden. Insbesondere kann durch die Warnmeldung direkt auf das zugeordnete Gerät bzw. die zugeordnete Funktionsgruppe verwiesen werden.

Das Verfahren umfasst auch einen vierten Schritt, in dem ein Einfügen der erzeugten Warnmeldung in eine aktive Alarmliste erfolgt. Die aktive Alarmliste stellt eine Mehrzahl an Alarmen und Hinweisen dar, die dem Hauptbenutzer und Mitbenutzern durch die Steuereinheit der Automatisierungsanlage während des Betriebs angezeigt werden. Die aktive Alarmliste kann dabei von einem Alarmmanagementsystem verwaltet werden, durch das eine Intensität der Darstellung von Warnmeldungen zur Unterstützung der Benutzer vorgebbar ist. Die aktive Alarmliste umfasst die Alarme und Warnmeldungen, die zum Zeitpunkt der Darstellung für die Benutzer, also den Hauptbenutzer und die Mitbenutzer, Gültigkeit haben. Durch das Einfügen der im dritten Schritt erzeugten Warnmeldung in die aktive Alarmliste wird diese darin zu einem Listenelement, das den gleichen Vorschriften unterworden ist wie andere Einträge, also Listenelemente. Insbesondere kann die Warnmeldung so vom einem beispielsweise vorhandenen Alarmmanagementsystem verarbeitet werden. Ferner erfolgt im vierten Schritt ein Ausgeben der im dritten Schritt erzeugten Warnmeldung an zumindest einen Mitbenutzer der Automatisierungsanlage. Zum Ausgeben der Warnmeldung kann diese auf einem Terminal dargestellt werden, das vom Mitbenutzer benutzt wird. Alternativ oder ergänzend kann die Warnmeldung auch auf dem vom Hauptbenutzer benutzten Terminal zu einem späteren Zeitpunkt an den Mitbenutzer ausgegeben werden. Hierdurch wird die im dritten Schritt vom Hauptbenutzer erzeugte Warnmeldung dem zumindest einen Mitbenutzer in sinnfälliger Weise zur Verfügung gestellt.

Erfindungsgemäß weist die im dritten Schritt erzeugte Warnmeldung ein durch den Hauptbenutzer editierbares Kommentarfeld auf. Das editierbare Kommentarfeld kann als Texteingabefeld ausgebildet sein, in das ein beliebiger Text oder Code speicherbar eingebbar ist. Dem Hauptbenutzer steht durch das editierbare Kommentarfeld eine einfache Möglichkeit zur Verfügung, jeglichen Hinweis an die Mitbenutzer zu erzeugen und in Verknüpfung mit dem entsprechenden Gerät bzw. der entsprechenden Funktionsgruppe darzustellen. Durch das Einfügen in die aktive Alarmliste ist die Warnmeldung an einer hierfür besonders geeigneten Weise darstellbar. Unter Benutzern von Automatisierungsanlagen besteht eine Tendenz, bei Vorhandensein von nicht in der Automatisierungsanlage integrierten Hinweisen, beispielsweise vom Hauptbenutzer verfassten Notizzetteln, den Inhalt der aktiven Alarmliste zunehmend zu ignorieren. Hierdurch wird auf neu auftauchende Alarme zu spät reagiert, wodurch sich Ausfallzeiten oder Effizienzverluste im Betrieb ergeben können. Zudem kann bei Vorhandensein von nicht in die Automatisierungsanlage integrierten Hinweisen und einem Alarm für einen Mitbenutzer ein Anweisungskonflikt entstehen, der Koordinationsaufwand erfordert und durch den eine sachgerechte Reaktion auf die vorliegende Betriebssituation erschwert wird. Durch das erfindungsgemäße Verfahren wird dem Hauptbenutzer eine einfache Möglichkeit zur Verfügung gestellt, zielgerichtet Anweisungen und/oder Hinweise an Mitbenutzer zu geben und gleichzeitig diese selbsttätig situationsgerecht zu priorisieren. Hierdurch werden Bedienfehler durch Mitbenutzer vermieden, und somit Havarien, Unfälle, Ausfälle und Effizienzverluste im Betrieb reduziert.

In einer Ausführungsform des beanspruchten Warnverfahrens wird die Warnmeldung im vierten Schritt an den Mitbenutzer ausgegeben, wenn dieser für das Gerät bzw. die Funktionsgruppe, der die Warnmeldung zugeordnet ist, eine Steuerungsberechtigung hat. Andernfalls wird die im dritten Schritt erzeugte Warnmeldung im vierten Schritt nicht an den Mitbenutzer ausgegeben. Die Steuerungsberechtigung für ein Gerät oder eine Funktionsgruppe ist in einem Computerprogrammprodukt, mit dem die Automatisierungsanlage betrieben wird, ohnehin vorgegeben und schnell ermittelbar. Das beanspruchte Warnverfahren stützt sich somit auf Daten, die in einer Automatisierungsanlage bereits vorhanden sind. Ein Ausgeben einer Warnung für ein Gerät oder ein Funktionsgruppe, für die der Mitbenutzer keine Steuerungsberechtigung hat, ist weitestgehend zwecklos, da der Mitbenutzer im Betrieb somit auch keine Möglichkeit hat, eine daran gebundene Anweisung oder Hinweis vom Hauptbenutzer zielgerichtet umzusetzen. Alternativ oder ergänzend kann die Warnmeldung in analoger Weise dann an den Mitbenutzer ausgegeben werden, wenn dieser eine Leseberechtigung für das entsprechende Gerät oder die Funktionsgruppe hat. Durch das beanspruchte Warnverfahren werden selbsttätig nur solche Warnmeldungen im vierten Schritt an den zumindest einen Mitbenutzer ausgegeben, wenn diese für ihn sinnvoll sind. Somit werden für den Mitbenutzer Ablenkungen vermieden, wodurch die Betriebssicherheit der Automatisierungsanlage weiter gesteigert wird.

Des Weiteren kann die Warnmeldung über eine Quittierungsfunktion verfügen, durch die die Warnmeldung deaktivierbar ist. Durch das Deaktivieren wird die Warnmeldung aus der aktiven Alarmliste entfernt und folglich nicht mehr dem Hauptbenutzer oder dem zumindest einen Mitbenutzer angezeigt. Die Quittierungsfunktion wiederum kann mit einer Quittierungsberechtigung verknüpft sein, durch die vorgebbar ist, welcher Mitbenutzer die Warnmeldung quittieren darf. Zusätzlich kann das Quittieren protokolliert werden, so dass nachvollziehbar ist, welcher Mitbenutzer die Warnmeldung zu welchem Zeitpunkt quittiert. Dies erlaubt es, ein Ansammeln überflüssiger Warnmeldungen in der aktiven Alarmliste zu vermeiden. Insbesondere kann ein Alarmmanagementsystem, das die aktive Alarmliste verwaltet, dadurch in puncto Rechen- und Speicheraufwand entlastet werden. Der Anzahl an Warnmeldungen, die gleichzeitig an die Mitbenutzer ausgegeben werden sind daher reduzierbar, wodurch Ablenkungen vermieden werden. Auch hierdurch wird die Betriebssicherheit der Automatisierungsanlage weiter erhöht.

Ferner kann im beanspruchten Warnverfahren die Warnmeldung einen Dringlichkeitsparameter aufweisen. Der Dringlichkeitsparameter kann beispielweise als vorgebbarer Wert in einer korrespondierenden Dringlichkeitsskala sein. Ein solcher Dringlichkeitsparameter ist als statischer Dringlichkeitsparameter aufzufassen. Alternativ oder ergänzend kann der Dringlichkeitsparameter aus einer Angabe zu mindestens einem der ausgewählten Geräte und/oder der ausgewählten Funktionsgruppe ermittelt werden, die in der Steuereinheit der Automatisierungsanlage gespeichert ist. Weiter alternativ oder ergänzend kann der Dringlichkeitsparameter auch aus einer Angabe über einen Zustand des Anlagenprozesses ermittelt werden. Derartige Dringlichkeitsparameter stellen dynamische Dringlichkeitsparameter dar. Durch den Hauptbenutzer ist insgesamt einstellbar, wie früh, und damit auch, in welcher Intensität die im dritten Schritt erzeugt Warnmeldung an den mindestens einen Mitbenutzer ausgegeben wird. Das beanspruchte Warnverfahren erlaubt dem Hauptbenutzer, die Warnmeldung in zielgerichteter und situationsgerechter Form dem Mitbenutzer auszugeben. Ferner ist die Warnmeldung so durch das Alarmmanagementsystem selbsttätig für den zumindest einen Mitbenutzer in puncto Priorität einstufbar. Infolgedessen wird so die situative Übersichtlichkeit für den mindestens einen Mitbenutzer gesteigert.

Darüber hinaus kann der Dringlichkeitsparameter eine Angabe über ein Terminal der Steuereinheit umfassen, auf dem die Warnmeldung auszugeben ist. Insbesondere ist dadurch vorgebbar, ob die Warnmeldung einen Mitbenutzer an einem anderen Terminal gerichtet ist oder einen Mitbenutzer, die zu einem späteren Zeitpunkt das Terminal des Hauptbenutzers verwendet. Alternativ oder ergänzend kann der Dringlichkeitsparameter auch eine Angabe über eine Mitbenutzergruppe umfassen, an die die Warnmeldung auszugeben ist. Eine Mitbenutzergruppe kann beispielsweise durch eine Rolle, Funktion, und/oder Berechtigungsstufe der jeweiligen Mitbenutzer definiert sein. Insbesondere können die Rolle oder Funktion der Mitbenutzer durch deren Zuständigkeit für einen entsprechenden Abschnitt der Automatisierungsanlage definiert sein. Dadurch ist durch den Hauptbenutzer ein zielgerichtetes Adressieren ausgewählter Mitbenutzer möglich, für die die Warnmeldung voraussichtlich relevant ist. Weiter alternativ oder ergänzend kann der Dringlichkeitsparameter auch eine Angabe über eine Ausgabeform der Warnmeldung umfassen. Warnmeldungen mit erhöhter Dringlichkeit können beispielsweise das Ausgeben einer akustischen Warnung oder ein Aktivieren einer Warnleuchte vorgeben. Zusätzlich kann der Dringlichkeitsparameter vorgeben, an welchen Stellen korrespondierend zur Warnmeldung eine Warnung ausgegeben wird. Beispielsweise ist vorgebbar, ob die entsprechende Warnung nur in einer Leitwarte ausgegeben wird, oder beispielsweise auf einem Werkgelände, auf dem sich die Automatisierungsanlage befindet, eine Sirene aktiviert wird. Die Warnmeldung ist folglich durch den Hauptbenutzer an eine breite Spanne von Einsatzfällen anpassbar und infolgedessen besonders vielseitig.

In einer weiteren Ausführungsform des beanspruchten Warnverfahrens kann die Warnmeldung im dritten Schritt auf einem ersten Terminal der Steuereinheit erzeugt werden, das beispielsweise vom Hauptbenutzer verwendet werden kann. Im vierten Schritt wird die vom Hauptbenutzer erzeugte Warnmeldung dann auf einem zweiten Terminal ausgegeben, das vom zumindest einen Mitbenutzer verwendet werden kann. Das zweite Terminal kann der Steuereinheit unmittelbar zugeordnet sein oder mittelbar über eine übergeordnete Steuereinheit. Das beanspruchte Warnverfahren ist dazu geeignet, eine Vielzahl an Mitbenutzern mit entsprechenden Warnmeldungen zu erreichen. Insbesondere ist das Warnverfahren zur Verwendung in komplexen Automatisierungsanlagen geeignet, in der eine Mehrzahl an Benutzern an unterschiedlichen Orten tätig sind und/oder abwechselnd tätig sind. Alternativ oder ergänzend kann eine am ersten Terminal erzeugte Warnmeldung auch auf einem Handgerät ausgegeben werden, das einem Mitbenutzer zugeordnet ist. Dazu ist das Handgerät über eine Drahtlosverbindung mit der Steuereinheit kommunikativ verbunden. Das Handgerät kann als beispielsweise Tablet, Notebook, Smartphone, Smartwatch, Diagnosegerät oder Entwicklerwerkzeug ausgebildet sein. Das beanspruchte Warnverfahren ist dazu geeignet, bei einer Reparatur oder Nachrüstung einer Automatisierungsanlage, Mitbenutzer wie Monteure situationsgerecht zu informieren.

Des Weiteren kann die Warnmeldung im beanspruchten Warnverfahren eine durch den Mitbenutzer aufrufbare unmittelbare Verknüpfung mit einer Datenausgangsschnittstelle und/oder einer Dateneingangsschnittstelle eines Geräts der Automatisierungsanlage aufweisen. Die so verknüpfte Datenausgangsschnittstelle ist dazu geeignet, zumindest zum zugehörigen Gerät einen Steuerungsbefehl zu senden. Das Gerät kann dabei das im zweiten Schritt ausgewählte zumindest eine Gerät sein oder zur im zweiten Schritt ausgewählten Funktionsgruppe gehören. Durch die vom Mitbenutzer aufrufbare unmittelbare Verknüpfung ist eine graphische Benutzeroberfläche aufrufbar, auf der bestimmungsgemäß das entsprechende Gerät bzw. die entsprechende Funktionsgruppe gesteuert wird, also eine Steuerungsoberfläche. Alternativ kann die unmittelbare Verknüpfung auch eine teilweise Repräsentanz einer derartigen graphischen Benutzeroberfläche sein. Eine vom Mitbenutzer aufrufbare unmittelbare Verknüpfung mit einer Dateneingangsschnittstelle kann analog eine graphische Benutzeroberfläche aufrufen, auf der bestimmungsgemäß Zustandsvariablen dargestellt werden, die den Zustand des entsprechenden Geräts bzw. der entsprechenden Funktionsgruppe wiedergeben. Eben kann die vom Mitbenutzer aufrufbare unmittelbare Verknüpfung auch eine teilweise Repräsentanz einer solchen graphischen Benutzeroberfläche sein. Eine derartige unmittelbare Verknüpfung ist durch den Benutzer im editierbaren Kommentarfeld durch einen geeigneten Code, beispielsweise eine mark-up language oder eine Projektierungssprache wie STEP7, in die Warnmeldung einbindbar. Zusätzlich kann dies auch auf graphischem Wege, beispielsweise per drag-and-drop, unterstützt werden. Das editierbare Kommentarfeld kann dadurch demzufolge durch den Hauptbenutzer als Ein- und Ausgabeoberfläche in Hinblick auf die Warnmeldung verwendet werden. Dadurch wird ein situationsgerechtes Reagieren durch den Mitbenutzer beschleunigt und vereinfacht. Insbesondere werden separate Eingaben durch den Mitbenutzer vermieden, bei denen die Gefahr eines Bedienfehlers besteht. Insgesamt wird dadurch die Betriebssicherheit der Automatisierungsanlage weiter erhöht. Weiter alternativ oder ergänzend können auch weitere Ressourcen in das editierbare Kommentarfeld eingebunden werden, beispielweise Grafiken.

Ferner kann ein Zustand von Warnmeldungen, die mittels des Warnverfahrens erzeugt werden, mittels einer Protokollfunktion in der Steuereinheit überwacht werden. Durch die Protokollfunktion werden Angaben wie eine Identität des Hauptbenutzers, ein Generierungszeitpunkt, der Inhalt der jeweiligen Warnmeldung, eine Ausgabehistorie der Warnmeldung, ein Quittierungszeitpunkt und/oder eine Identität des quittierenden Mitbenutzers gespeichert. Die Protokollfunktion kann als Komponente des Alarmmanagementsystems ausgebildet sein. Mittels der Protokollfunktion wird Nachvollziehbarkeit gewährleistet, so dass nachträgliche Analysen von Havarien, Unfällen, Ausfällen oder ineffizienten Betriebsphasen schneller und zielgerichteter durchführbar sind. Insbesondere ist dadurch nachvollziehbar, mit welcher Anweisungslage und Alarmlage der Mitbenutzer in einem solchen Fall konfrontiert gewesen ist. Durch das beanspruchte Warnverfahren wird die Weiterentwicklung von sicheren und wirtschaftlichen Automatisierungsanlagen unterstützt.

Die zugrundeliegende Aufgabenstellung wird ebenso durch ein erfindungsgemäßes Computerprogrammprodukt gelöst, das zum Steuern einer Automatisierungsanlage ausgebildet ist. Hierzu ist das Computerprogrammprodukt auf einer Steuereinheit der Automatisierungsanlage ausführbar gespeichert und dazu ausgebildet, zumindest ein Gerät der Automatisierungsanlage anzusteuern. Das Ansteuern des zumindest einen Geräts umfasst ein Erzeugen von Steuerbefehlen. Erfindungsgemäß ist das Computerprogrammprodukt zu einem Ausführen eines Warnverfahrens nach zumindest einer der oben skizzierten Ausführungsformen ausgebildet. Das Computerprogrammprodukt ist auf einer Vielzahl an Steuereinheiten ausführbar und kann so im Zuge einer Nachrüstung auf der Steuereinheit ausgespielt werden. Infolgedessen ist eine Vielzahl an bestehenden Automatisierungsanlagen durch das erfindungsgemäße Computerprogrammprodukt in puncto Sicherheit und Wirtschaftlichkeit verbesserbar.

Ebenso wird die eingangs beschriebene Aufgabe durch eine erfindungsgemäße Steuereinheit gelöst. Die Steuereinheit ist zu einem Ansteuern zumindest eines Geräts einer Automatisierungsanlage ausgebildet. Insbesondere kann die Steuereinheit dazu ausgebildet sein, Steuerbefehle zu erzeugen und an das zumindest eine Gerät zu senden. Die Steuereinheit verfügt über eine Recheneinheit und eine Speichereinheit, die zusammenwirken, um ein Computerprogrammprodukt auszuführen, durch das das Erzeugen der Steuerbefehle bestimmt wird. Das Computerprogrammprodukt ist erfindungsgemäß nach einer der oben beschriebenen Ausführungsformen ausgebildet. Alternativ oder ergänzend kann die Steuereinheit zum Durchführen eines Warnverfahrens nach einer der oben skizzierten Ausführungsformen ausgebildet sein. Die Steuereinheit kann bei einem Nachrüsten der Automatisierungsanlage in relativ einfacher Weise ausgetauscht werden. Auch dadurch ist das beanspruchte Warnverfahren in wirtschaftlicher Weise auf bestehende Automatisierungsanlagen übertragbar.

Ferner wird die dargelegte Aufgabenstellung durch eine erfindungsgemäße Automatisierungsanlage gelöst, die eine Mehrzahl an Geräten umfasst, mit denen ein Anlagenprozess durchführbar ist. Zum Durchführen des Anlagenprozesses sind die Geräte mit einer Steuereinheit verbunden, die dazu geeignet ist, an die Geräte Steuerbefehle zu senden. Bei der Automatisierungsanlage kann es sich beispielsweise um eine Fertigungsanlage, eine chemische Anlage, eine Wasserstoffgewinnungsanlage, eine Lebensmittelverarbeitungsanlage, eine Raffinerie, eine Öl- oder Gasförderanlage, eine pharmazeutische Anlage, ein Kraftwerk oder ein Leitsystem, insbesondere ein Verkehrsleitsystem, handeln. Erfindungsgemäß ist die Steuereinheit der Automatisierungsanlage gemäß einer der oben skizzierten Ausführungsformen ausgebildet. Die technischen Vorzüge des beanspruchten Warnverfahrens werden dadurch auf eine Automatisierungsanlage übertragen, die somit eine erhöhte Betriebssicherheit und Wirtschaftlichkeit aufweist.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: eine erste Ausführungsform der beanspruchten Automatisierungsanlage in einem Stadium des beanspruchten Warnverfahrens;
- FIG 2: ein weiteres Stadium des beanspruchten Warnverfahrens in der ersten Ausführungsform der beanspruchten Automatisierungsanlage.

Eine erste Ausführungsform der beanspruchten Automatisierungsanlage 10, die eine Mehrzahl an Geräten 20 aufweist. Die Geräte 20 sind als Sensoren 22, Aktoren 24 und Master-Geräte 26 ausgebildet, die zusammenwirken, um einen Anlagenprozess 15 auf der Automatisierungsanlage 10 durchzuführen. Im Zuge des Anlagenprozesses 15 werden Prozessgrößen 16 eines Prozessmediums 13 durch Sensoren 22 erfasst und mittels Aktoren 24 auf diese eingewirkt. In einem bestimmungsgemäßen Betrieb der Automatisierungsanlage 10 läuft der Anlagenprozess 15 ab, wobei die Geräte 20 sich in einem aktiven Zustand befinden. Das Bereitstellen der Geräte 20 im aktiven Zustand stellt einen ersten Schritt 110 in einem Warnverfahren 100 dar, das auf der Automatisierungsanlage 10 ausgeführt wird. In einem zweiten Schritt 120 erfolgt ein Auswählen einer Funktionsgruppe 25 mit einer Mehrzahl an Geräten 20 durch einen Hauptbenutzer 12. Das Auswählen durch den Hauptbenutzer 12 wird über eine Benutzereingabe 17 an einem ersten Terminal 32 einer Steuereinheit 30 durchgeführt. Die Steuereinheit 30 ist dazu ausgebildet, die Geräte 20 zur bestimmungsgemäßen Durchführung des Anlagenprozesses 15 anzusteuern, was auch ein Abrufen von Messdaten, insbesondere von Sensoren 22, umfasst. Die Funktionsgruppe 25 umfasst zwei Aktoren 24, einen Sensor 22 und ein Master-Gerät 26. Durch die Funktionsgruppe 25 wird ein Abschnitt der Automatisierungseinheit 10 definiert, wobei deren Geräte 20, also die Aktoren 24, der Sensor 22 und das Master-Gerät 26, einen eingrenzbaren Teil des Anlagenprozesses 15 durchführen. Das Auswählen der Funktionsgruppe 25 im zweiten Schritt 120 wird über eine nicht näher dargestellte graphische Benutzeroberfläche 31, also eine Steuerungsoberfläche 31, der Steuereinheit 30 durchgeführt. Die Steuereinheit 30 verfügt über ein zweites Terminal 34, auf das eine Mehrzahl an Mitbenutzern 14 Zugriff hat. Ein Zustand der Automatisierungsanlage 10 ist über die Terminals 32, 34 dem Hauptbenutzer 12 und den Mitbenutzern 14 anzeigbar. Ebenso erlauben sie dem Hauptbenutzer 12 und dem Mitbenutzer 14, die Automatisierungsanlage 10 mittels der Steuereinheit 14 zu steuern. Das Warnverfahren 100 wird in einem Computerprogrammprodukt 60 ausgeführt, das in der Steuereinheit 30 ausführbar gespeichert ist. Ferner ist die Steuereinheit 30 über eine kommunikative Datenverbindung 37 mit einer übergeordneten Steuereinheit 35 verbunden, die als Computer-Cloud ausgebildet ist.

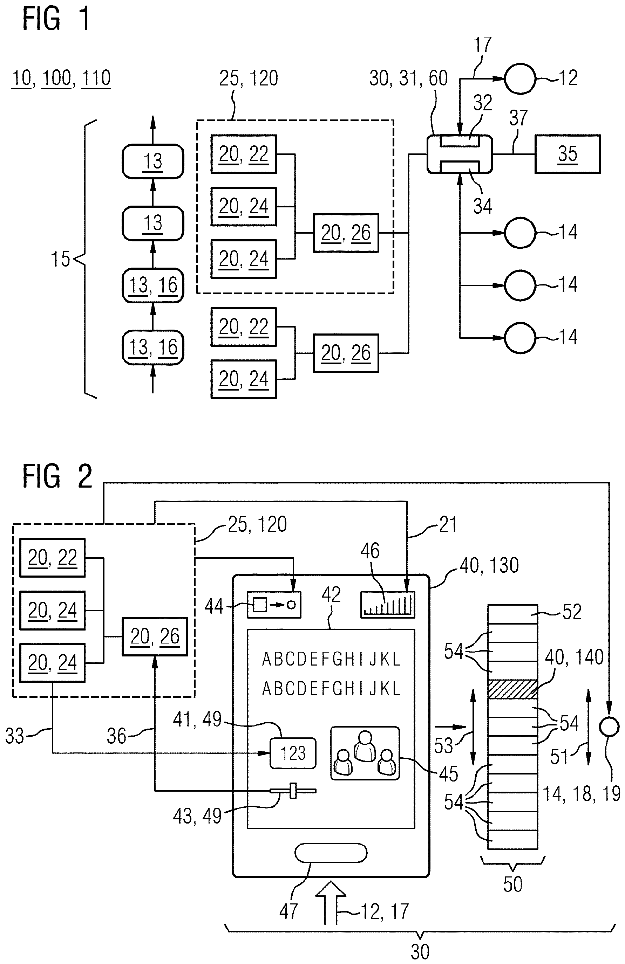

In FIG 2 ist das beanspruchte Warnverfahren 100, das in der ersten Ausführungsform der beanspruchten Automatisierungsanlage 10 ausgeführt wird, in einem Stadium dargestellt, das sich an das Stadium nach FIG 1 anschließt. Das Stadium nach FIG 2 geht davon aus, dass der zweite Schritt 120, in dem die Funktionsgruppe 25 mit den Geräten 20 ausgewählt wird, abgeschlossen ist. Es folgt ein dritter Schritt 130, in dem durch Benutzereingaben 17 durch den Hauptbenutzer 12 eine Warnmeldung 40 erzeugt wird, die auf einem Terminal 32, 34 der Steuereinheit 30 ausgebbar ist. Beim Erzeugen der Warnmeldung 40 wird in dieser auch eine Repräsentanz 44 der Funktionsgruppe 25 erzeugt, auf die die Warnmeldung 40 durch das Auswählen im zweiten Schritt 120 bezogen ist. Durch die Repräsentanz 44 ist die Funktionsgruppe 25 in der Warnmeldung 40 eindeutig für den Hauptbenutzer 12 und zumindest einen Mitbenutzer 14 identifizierbar. Des Weiteren werden beim Erzeugen der Warnmeldung 40 Geräteangaben 21 von den Geräten 20 der Funktionsgruppe 40 ermittelt. Die Geräteangaben 21 umfassen Angaben dazu, welche Dringlichkeit einem kritischen Zustand an den entsprechenden Geräten 20 zuzuschreiben ist, also wie dringlich eine Reaktion hierauf geboten ist. Die Gerätedaten 21 umfassen hierzu ebenso Messwerte, die von den Geräten 20, die als Sensoren 22 ausgebildet sind, erfasst werden. Ebenso umfassen die Gerätedaten 21 Angaben zur Funktionsgruppe 25 selbst. Hieraus wird im dritten Schritt 130 ein Dringlichkeitsparameter 46 ermittelt.

Darüber hinaus umfasst die Warnmeldung 40 eine Angabe über eine Mitbenutzergruppe 45, die durch Benutzereingaben 17 des Hauptnutzers 12 vorgebbar ist. Durch die Angaben zur Mitbenutzergruppe 45 ist unter eine Mehrzahl an Mitbenutzern 14 ein Adressatenkreis für die Warnmeldung 40 definierbar. Die Mitbenutzergruppe 45 ist unter anderem durch eine Leseberechtigung 18 für zumindest eines Geräts 20 der Funktionsgruppe 25 und/oder eine Steuerungsberechtigung 19 für zumindest ein Gerät 20 der Funktionsgruppe 25 definiert. Alternativ oder ergänzend können auch Funktionsrollen der Mitbenutzer 14 als Kriterium für die Erstellung der Mitbenutzergruppe 45 dienen. Ebenso weist die Warnmeldung 40 eine unmittelbare Verknüpfung 49 zu einer Datenausgangsschnittstelle 43 auf, durch die ein Gerät 20 der Funktionsgruppe 25, nämlich das Master-Gerät 26, mittels eines Steuerbefehls 36 zugegriffen werden kann. Durch die unmittelbare Verknüpfung 49 ist durch einen Mitbenutzer 14 eine nicht näher gezeigte graphische Benutzeroberfläche erreichbar, die eine entsprechende Steuerung des Master-Geräts 26 erlaubt. Analog dazu weist die Warnmeldung 40 auch eine unmittelbare Verknüpfung 49 zu einer Dateneingangsschnittstelle 41 auf. Darüber ist für einen Mitbenutzer 14 eine nicht näher gezeigte graphische Benutzeroberfläche erreichbar, wo Messsignale 33, also entsprechende Messwerte, von einem als Sensor 22 ausgebildeten Gerät 20 der Funktionsgruppe 25 ausgebbar sind.

Die Auswahl der Benutzergruppe 45, die unmittelbaren Verknüpfungen 49 zur Dateneingangsschnittstelle 41 bzw. der Datenausgangsschnittstelle 43 sind in einem editierbaren Kommentarfeld 42 angeordnet. Das editierbare Kommentarfeld 42 ist dazu geeignet, einen vom Hauptbenutzer 12 vorgebbaren Text zu speichern und als Teil der Warnmeldung 40 an zumindest einen Mitbenutzer 14 auszugeben. Das editierbare Kommentarfeld 42 ist dazu geeignet, Anweisungen und Hinweise des Hauptbenutzer 12 in einfacher Weise festzuhalten und in sinnfälliger Form an zumindest einen Mitbenutzer 14 auszugeben. Die Mitbenutzergruppe 45 sowie die unmittelbaren Verknüpfungen 49 zu den Dateneingangsschnittstellen 41 und Datenausgangsschnittstellen 43 sind im editierbaren Kommentarfeld 42 durch Code, beispielsweise einer sogenannten mark-up language, vorgebbar.

Die Warnmeldung 40 weist ebenso eine Quittierungsfunktion 47 auf, die über eine entsprechende graphische Schaltfläche implementiert ist. Die Quittierungsfunktion 47 erlaubt es, einem Mitbenutzer 14, eine angezeigte Warnmeldung 40 zu deaktivieren. Eine Betätigung der Quittierungsfunktion 47 ist durch eine auf die Warnmeldung 40 bezogene Protokollfunktion 55 protokollierbar. Durch das Quittieren, also das Deaktivieren der Warnmeldung 40, wird dieser aus einer aktiven Alarmliste 52 entfernt. Die aktive Alarmliste 52 gehört zu einem Alarmmanagementsystem 50 innerhalb der Steuereinheit 30 gemäß FIG 1. Das Alarmmanagementsystem 50 verwaltet eine Mehrzahl an Alarmen 54, die während des Betriebs der Automatisierungsanlage 10 erzeugt werden. Durch das Alarmmanagementsystem 50 wird für die Alarme 54 jeweils eine Dringlichkeit ermittelt und die Alarme 54 danach sortiert in der aktiven Alarmliste 52 dem Hauptbenutzer 12 und den Mitbenutzern 14 angezeigt. Die Warnmeldung 40 wird im dritten Schritt 130 erstellt und ist durch den Dringlichkeitsparameter 46 in die aktive Alarmliste 52 einsortierbar. Hierzu ist der Dringlichkeitsparameter 46 der Warnmeldung 40 in seinem Format kompatibel mit der Systematik der aktiven Alarmliste 52 ausgebildet oder zumindest in diese Systematik konvertierbar. Unter Berücksichtigung des Dringlichkeitsparameters 46 ist die Warnmeldung 40 in einem vierten Schritt 140 des beanspruchten Verfahrens 100 zumindest einem Mitbenutzer 14 anzeigbar. Der zumindest eine Mitbenutzer 14 verfügt über Leseberechtigungen 18 und Steuerungsberechtigungen 19, die ihm ein Ablesen der Sensoren 22 und ein Steuern des Master-Geräts 26 der Funktionsgruppe 25 ermöglichen. Der zumindest eine Mitbenutzer 14 wird anhand der Lese- und Steuerungsberechtigungen 18, 19 als zulässiger Adressat der Warnmeldung 40 im Verfahren 100 identifiziert. Infolgedessen wird die Warnmeldung 40 dem zumindest einen Mitbenutzer 14 im vierten Schritt 140 auch angezeigt. Infolge einer sich dynamisch entwickelnden Betriebssituation der Automatisierungsanlage 10 weist die Warnmeldung 40 relativ zu den Alarmen 54 eine gleitende Priorität 53 auf. Dadurch fügt sich die Warnmeldung 40 in den Betrieb des Alarmmanagementsystem 50 ein. Die Warnmeldung 40 wird folglich in selbsttätig angepasster Form an den zumindest einen Mitbenutzer 14 ausgegeben, wodurch unnötige Ablenkungen des zumindest einen Mitbenutzers 14 minimiert werden. Das in FIG 2 dargestellte Verfahren 100 wird durch ein Computerprogrammprodukt 60 ausgeführt, das unter anderem in FIG 1 gezeigt ist.

## Patentansprüche

1. Warnverfahren (100) für einen Mitbenutzer (14) einer Steuereinheit (30) einer Automatisierungsanlage (10), die eine Mehrzahl an Geräten (20) umfasst, die in einer Funktionsgruppe (25) koordiniert zusammen ansteuerbar sind, umfassend die Schritte:
a) Bereitstellen der Geräte (20) in einem aktiven Betriebszustand;
b) Auswählen zumindest eines Geräts (20) der Funktionsgruppe (25) oder der Funktionsgruppe (25) durch einen Hauptbenutzer (12);
c) Erzeugen einer Warnmeldung (40) für das zumindest eine im Schritt b) ausgewählte Gerät (20) bzw. die Funktionsgruppe (25);
d) Einfügen der Warnmeldung (40) in eine aktive Alarmliste (52) und Ausgeben der Warnmeldung (40) an den Mitbenutzer (14) ;
wobei die Warnmeldung (40) ein durch den Hauptbenutzer (12) editierbares Kommentarfeld (42) aufweist.

2. Warnverfahren (100) nach Anspruch 1, **dadurch gekennzeichnet, dass** die Warnmeldung (40) im Schritt d) dem Mitbenutzer (14) angezeigt wird, wenn der Mitbenutzer (14) für das zumindest eine ausgewählte Gerät (20) bzw. die Funktionsgruppe (25) eine Steuerungsberechtigung (19) und/oder eine Leseberechtigung (18) hat.

3. Warnverfahren (100) nach Anspruch 1 oder 2, **dadurch gekennzeichnet, dass** die Warnmeldung (40) über eine Quittierungsfunktion (47) verfügt, durch die die Warnmeldung (40) deaktivierbar ist.

4. Warnverfahren (100) nach einem der Ansprüche 1 bis 3, **dadurch gekennzeichnet, dass** die Warnmeldung (40) über einen durch ein Alarmmanagementsystem (50) der Steuereinheit (30) verarbeitbaren Dringlichkeitsparameter (46) verfügt.

5. Warnverfahren (100) nach Anspruch 4, **dadurch gekennzeichnet, dass** der Dringlichkeitsparameter (46) eine Angabe über zumindest ein Terminal (32, 34) der Steuereinheit () umfasst, auf dem die Warnmeldung (40) auszugeben ist, eine Angabe über eine Mitbenutzergruppe (45), an die die Warnmeldung (40) auszugeben ist, und/oder eine Angabe über eine Ausgabeform der Warnmeldung (40).

6. Warnverfahren (100) nach einem der Ansprüche 1 bis 5, **dadurch gekennzeichnet, dass** die Warnmeldung (40) im Schritt c) auf einem ersten Terminal (32) der Steuereinheit (30) erzeugt wird und im Schritt d) auf einem zweiten Terminal (34) der Steuereinheit (30) ausgegeben wird.

7. Warnverfahren (100) nach einem der Ansprüche 1 bis 6, **dadurch gekennzeichnet, dass** die Warnmeldung (40) eine durch den Mitbenutzer (14) aufrufbare unmittelbare Verknüpfung (49) mit einer Datenausgangsschnittstelle (43) und/oder einer Dateneingangsschnittstelle (41) eines Geräts (20) der Automatisierungsanlage (10) aufweist.

8. Warnverfahren (100) nach einem der Ansprüche 1 bis 7, **dadurch gekennzeichnet, dass** im Schritt c) eine Repräsentanz (44) des zumindest einen ausgewählten Geräts (20) bzw. der ausgewählten Funktionsgruppe (25) erzeugt wird und/oder eine durch den Mitbenutzer (14) aufrufbare unmittelbare Verknüpfung (41) zu einer zugehörigen Steuerungsoberfläche (31) der Steuereinheit (30) aufweist.

9. Warnverfahren (100) nach einem der Ansprüche 1 bis 8, **dadurch gekennzeichnet, dass** ein Zustand der Warnmeldungen (40) mittels einer Protokollfunktion (55) in der Steuereinheit (30) überwacht wird.

10. Computerprogrammprodukt (60) zum Steuern einer Automatisierungsanlage (10), das auf einer Steuereinheit (30) ausführbar speicherbar ist und zu einem Ansteuern zumindest eines Geräts (20) der Automatisierungsanlage (10) ausgebildet ist, **dadurch gekennzeichnet, dass** das Computerprogrammprodukt (60) zum Ausführen zumindest eines Warnverfahrens (100) nach einem der Ansprüche 1 bis 9 ausgebildet ist.

11. Steuereinheit (30) zum Ansteuern zumindest eines Geräts (20) einer Automatisierungsanlage (10), die über eine Recheneinheit und eine Speichereinheit zum Speichern und Ausführen eines Computerprogrammprodukt (60) aufweist, **dadurch gekennzeichnet, dass** das Computerprogrammprodukt (60) nach Anspruch 10 ausgebildet ist.

12. Automatisierungsanlage (10), umfassend eine Mehrzahl an Geräten (20), die zu einem Durchführen eines Anlagenprozesses (15) mit einer Steuereinheit (30) verbunden sind, **dadurch gekennzeichnet, dass** die Steuereinheit (30) nach Anspruch 11 ausgebildet ist.
